# EUROPÄISCHE PATENTSCHRIFT

(11) **EP 2 740 243 B1**
(45) Veröffentlichungstag und Bekanntmachung des Hinweises auf die Patenterteilung: **01.01.2020**
(21) Anmeldenummer: 12727356.3
(22) Anmeldetag: 06.06.2012
(51) Int. Cl.: B60T 8/36, B60T 8/171, H04L 12/40

(54) **KOMMUNIKATIONSANBINDUNG FÜR SENSORIK IN FAHRZEUG-REGELSYSTEMEN**
COMMUNICATIONS CONNECTION FOR SENSORS IN CONTROL SYSTEMS OF VEHICLES
RACCORDEMENT DE COMMUNICATION POUR SYSTÈME DE DÉTECTION DANS DES SYSTÈMES DE RÉGLAGE DE VÉHICULES

(30) Priorität: 01.08.2011 DE 102011080169
(43) Veröffentlichungstag der Anmeldung: 11.06.2014
(73) Patentinhaber: Robert Bosch GmbH, 70442 Stuttgart (DE)
(72) Erfinder: WELLHOEFER, Matthias, Marcus, 70499 Stuttgart (DE); REINER, Juergen, 88167 Gestratz (DE)
(86) Internationale Anmeldenummer: PCT/EP2012/060668
(87) Internationale Veröffentlichungsnummer: WO 2013/017318

(56) Entgegenhaltungen:
- WO-A1-2009/130725
- DE-A1-102007 018 468
- US-A1- 2009 121 776
- "Peripheral Sensor Interface for Automotive Applications", PSI5 Consortium , 1. Juni 2011 (2011-06-01), Seite 1-58, XP002682017, Gefunden im Internet: URL:http://web.archive.org/web/20110724092 236/http://www.psi5.org/en/pool/pdf/110601 _psi5_spec_v20_base.pdf [gefunden am 2012-08-20]

## Beschreibung

Die vorliegende Erfindung betrifft Regelsysteme in Fahrzeugen. Insbesondere betrifft die vorliegende Erfindung die Anbindung von Sensoren in Fahrzeug-Regelsystemen bzw. Bremsregelsysteme. Weiter insbesondere betrifft die vorliegende Anmeldung die Anbindung von Drucksensoren in ESP-Systemen.

### Stand der Technik

Regel-Systeme in Fahrzeugen, beispielsweise in Hybrid- und/oder Elektrofahrzeugen, weisen gewöhnlich Sensoren, z.B. Drucksensoren in einem Hydraulikkreislauf auf. Hierzu werden regelmäßig ein, drei oder auch fünf Drucksensoren verwendet.

Ein Basissystem besitzt beispielsweise einen Drucksensor, während ein erweitertes System einen Drucksensor im Primärkreis sowie jeweils einen zusätzlich Drucksensor pro Sekundärkreis aufweist. Speziell bei Hybridfahrzeugen werden meist bis zu fünf Drucksensoren eingesetzt, die in einem gemeinsamen Hydrauliksystem integriert sind.

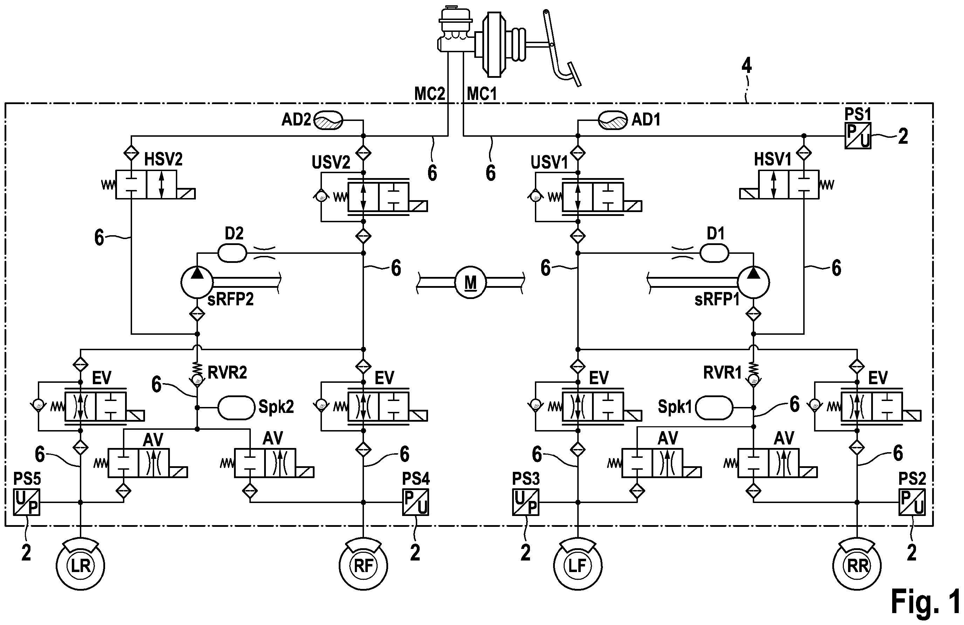

Figur 1 zeigt einen exemplarischen Hydraulikschaltplan mit fünf Drucksensoren 2 PS1 bis PS5. Figur 1 stellt hierbei beispielhaft das durch ein ESP-Steuergerät 4 eines Fahrzeugs integriert gesteuertes Hydrauliksystem dar.

Ein zentral angeordneter Drucksensor 2 PS1 überwacht den Primärkreis des Hydrauliksystems, während vier weitere Drucksensoren 2 PS2 bis PS5 jeweils die Hydraulikleitung 6 der einzelnen Bremszylinder überwacht, welche exemplarisch an den vier Rädern angeordnet dargestellt sind.

Die rechte Seite des Hydraulikschaltplans der Figur 1 umfasst den Primärkreis des MasterCyclinders MC1, der das linke Vorderrad (LF) und das rechte Hinterrad (RR) bedient. Die linke Seite bedient das linke Hinterrad (LR) und das rechte Vorderrad (RF). Der strichlierte Block umfasst die Komponenten des ESP Steuergerätes 4.

Üblicherweise kann der Systemdruck im Bremssystem vom Bremspedal und somit vom Fahrerfuß abgekoppelt und eingeschlossen werden. Dies wird durch das USV (Umschaltventil, stromlos offen) und das HSV (Hochdruckschaltventil, stromlos geschlossen) realisiert. Ein Abtrennen erfolgt durch Schließen des USV.

Der Bremsdruck wird durch das geöffnete USV und durch das geöffnete EV (Einlassventil, stromlos offen) beim Betätigen der Bremse in den Bremssattel gegeben. Der Rückfluss ist durch das stromlos geschlossene AV (Auslassventil) an jedem Rad blockiert. Muss am Rad Bremsdruck abgelassen werden, so wird das AV geöffnet und die Bremsflüssigkeit fließt in Speicherkammer Spk1 bzw. Spk2 ab.

Durch ein Rückschlagventil RVR kann daraufhin die Rückförderpumpe die Speicherkammern auch wieder entleeren, indem Motor M, schematisch mittig dargestellt, die Rückförderpumpen sRFP1 und sRFP2 betätigt.

Drosseln D1, D2 sowie Abströmdämpfer AD1 und AD2 sind Geräuschmaßnahmen, um störende Geräusche der Pumpe bei der Hydraulikförderung.

Die den Ventilen parallel gezeichneten Kugeln stellen Rückstoßventile dar, die Rauten mit Strich stehen für Siebelement, welche verhindern sollen, dass Schmutz, z.B. Schmutzpartikel, in die Ventile gelangt.

Der in Figur 1 dargestellte, beispielhafte Hydraulikschaltplan mit fünf Drucksensoren 2 entspricht dabei einer derzeit üblichen, maximalen Ausbaustufe.

Figur 2a zeigt eine exemplarische Ausgestaltung eines Hydroaggregates mit fünf Drucksensoren 2, welche jeweils vier Goldkontaktierungspads 8 bzw. Goldkontakte 8a je Sensor 2 aufweisen. Figur 2b zeigt die Kontaktaufnahme zum Steuergerät 4 mit jeweils vier Goldfedern 8b je Drucksensoranschluss zur Kontaktierung der Goldpads 8a.

Herkömmliche Drucksensoren besitzen je vier Goldkontaktierungen mit je einem Goldpads und verwenden eine Goldfederkontaktierung zum Steuergerät. Zwei Kontakte werden üblicherweise für die Spannungsversorgung des Drucksensors verwendet, während zwei weitere die Signalleitung für die Ausgabe eines analogen Drucksignals ausbilden.

Herkömmlicherweise werden Drucksensoren einzeln verdrahtet und konnektiert, so dass je Drucksensor vier Pads im Sensor und vier Kontaktfedern im Steuergerät benötigt werden. Mit steigender Anzahl von Sensoren steigt somit auch die benötige Anzahl von Pads und Federn proportional an. Im System der Figur 1 finden dadurch insgesamt 20 Kontaktpads sowie 20 Kontaktfedern Verwendung. Dies führt zu einem hohen Arbeitsaufwand bei der Herstellung von Sensoren und Steuergerät und stellt somit einen signifikanten Kostenfaktor dar.

"Peripheral Sensor Interface for Automotive Applications", veröffentlicht am 01.06.2011, ist die Spezifikation des Peripheral Sensor Interface (PSI5).

WO 2009/130725 A1 offenbart eine Vorrichtung zur Erkennung von Hindernissen.

US 2009/121776 A1 offenbart einen Busschalter zum Herstellen und Trennen einer Busverbindung.

### Offenbarung der Erfindung

Eine Aufgabe der vorliegenden Erfindung ist die Reduzierung der Anzahl der Goldkontaktierungen zum Anschluss der Drucksensoren im ESP-Steuergerät.

Die Aufgabe wird durch den Gegenstand der unabhängigen Ansprüche gelöst. Vorteilhafte Ausgestaltungen und Weiterbildungen sind Gegenstand abhängiger Ansprüche.

Die Drucksensoren werden erfindungsgemäß unter Verwendung von sehr schnellen, digitalen, busfähigen Zweidrahtschnittstellen wie zum Beispiel dem Peripheral Sensor Interface (PSI5) oder dem Distributed System Interface (DSI) an ein Steuergerät angeschlossen.

PSI5 verwendet eine Zweidrahtleitung und wird in der Automobilelektronik zum Anschluss entfernt angeordneter Sensoren an elektronische Steuergeräte eingesetzt. Implementierbar sind mit PSI5 Punkt-zu-Punkt- sowie Buskonfigurationen mit asynchroner und synchroner Kommunikation. Das Peripheral Sensor Interface verwendet eine Stromschnittstelle mit Modulation eines Sendestroms zur Datenübertragung auf die Versorgungsleitung. Durch den relativ hohen Signalstrom von 26mA und die Bitkodierung im Manchester-Code wird eine hohe Störsicherheit erreicht. Hierdurch ist die Verwendung einer kostengünstigen, verdrillten Zweidrahtleitung zur Verkabelung ausreichend. Datenworte bestehen aus jeweils zwei Start-Bits, 8 bis 24 Datenbits und einem Parity-Bit oder 3-Bit CRC (Cyclic Redundancy Check).

Unter Verwendung einer PSI-Schnittstelle können bis zu vier Drucksensoren über zwei Leitungen verbunden werden. Die Leitungen werden hierbei entweder als serieller Bus oder paralleler Bus betrieben, die Schnittstelle selbst ist als Stromschnittstelle ausgebildet. Das bedeutet, die beiden Kontakte bzw. Versorgungsleitungen werden gleichzeitig durch Strommodulation zur Übertragung von digitalen Sensordaten verwendet. Durch die Reduzierung der Anschlüsse auf zwei bei gleichzeitiger Erhöhung der möglichen angeschlossenen Sensoren auf bis zu drei bzw. vier oder mehr lässt sich auch ein modulares Baukastensystem aus Drucksensor-Modulen realisieren.

Diese bestehen aus Baugruppen mit einer Mehrzahl von intern über die Busverbindung verschalteten Drucksensoren. Über eine zentrale Stromschnittstelle können diese Baugruppen bzw. Module mit einem Steuergerät, beispielsweise einem ESP-Steuergerät, verbunden werden. Durch die Reduzierung der benötigten Anschlusskontakte lässt sich somit ein Steuergerätegehäuse in vereinfachter und kostengünstiger Weise realisieren. Weiterhin können Drucksensormodule über ein standardisiertes, auch geometrisch bzw. mechanisch standardisiertes, Interface angebunden werden.

Kern der Erfindung ist somit die Verwendung einer Zweidrahtstromschnittstelle beim Anschluss eines Drucksensors im ESP-Steuergerät anstatt einer separaten Spannungsversorgung sowie separaten analogen Schnittstelle mit insgesamt vier Anschlusskontakten oder Pins. Weiterhin lässt sich hierdurch eine Kombination mehrerer Drucksensoren realisieren, welche am ESP-Steuergerät in einem Modul zusammengeschlossen sind und an diesem intern durch eine digitale schnelle Busschnittstelle, beispielsweise PSI5 oder DSI angeschlossen sind. Beispielsweise lassen sich somit drei Drucksensoren über zwei Kontakte, fünf Drucksensoren beispielsweise über vier Kontakte konnektieren.

Hierdurch ergibt sich zunächst eine Kosteneinsparung bei Aufbau- und Verbindungstechnik durch ein Standardinterface sowie Einsparung der Materialkosten durch Reduktion von Goldpads und Goldfedern zum Anschluss. Weiterhin ergibt sich auch in der Fertigung ein reduzierter Arbeitsaufwand, da beispielsweise weniger Federn eingelegt bzw. weniger Pads eingepresst werden müssen, wodurch sich auch die Taktzeit der Fertigung erhöhen lässt.

Ausführungsformen der Erfindung sind in den Zeichnungen dargestellt und in der nachfolgenden Beschreibung näher erläutert.

Es zeigen
- Figur 1: eine exemplarische Ausgestaltung eines Hydrauliksystems mit fünf Drucksensoren;

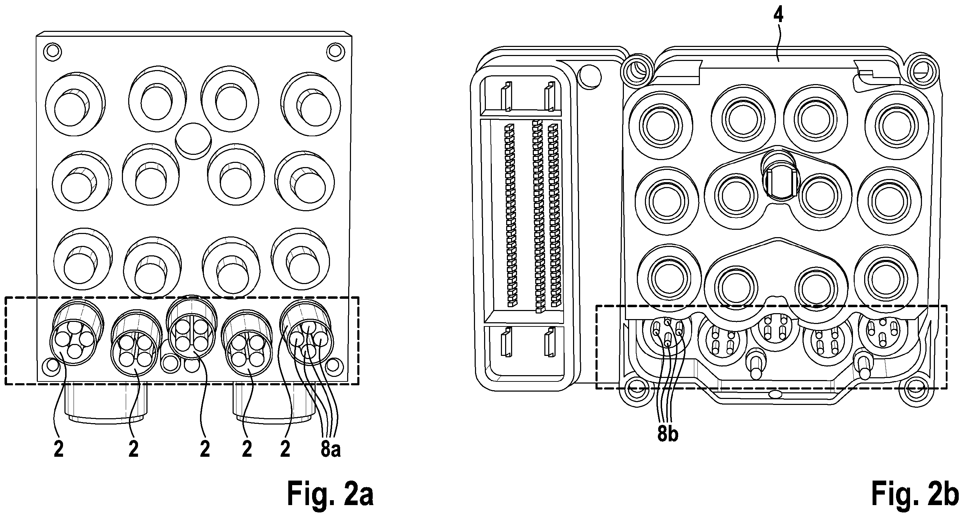

- Figuren 2a, b: eine exemplarische Ausgestaltung eines Steuergerätes mit fünf Drucksensoren mit jeweils vier Anschlusskontakten; und

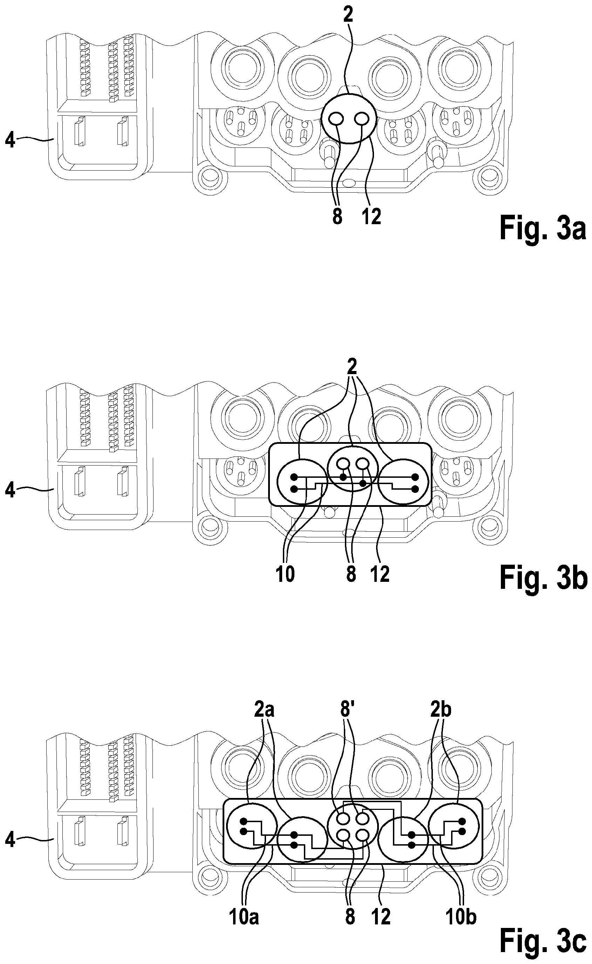

- Figuren 3a-c: exemplarische Ausgestaltungen des Anschlusses von Drucksensoren gemäß der vorliegenden Erfindung.

### Ausführungsformen der Erfindung

In Figur 3a exemplarisch dargestellt ist eine Anschlussschnittstelle eines Drucksensors 2 an ein Steuergerät 4, beispielsweise ein ESP-Steuergerät. Drucksensor 2 verwendet nur zwei Kontakte bzw. Pins 8 zum Anschluss.

Realisiert wird der Zweikontaktanschluss durch die Verwendung einer Zweidrahtstromschnittstelle zwischen Drucksensor 2 und ESP-Steuergerät 4 anstatt einer herkömmlichen Spannungsversorgung und separaten, analogen Schnittstelle mit insgesamt vier Pins.

Mehrere, in Figur 3b exemplarisch drei, Drucksensoren 2 können untereinander als Modul 12 unter Verwendung eines Kommunikationsbusses 10, beispielsweise PSI5 oder DSI, verbunden und weiterhin über zwei Kontakte 8 an ein Steuergerät 4 angeschlossen sein.

Bus 10 ist hierbei beispielsweise als eine digitale busfähige Zweidrahtschnittstelle ausgebildet, auf welcher bzw. an welcher die einzelnen Drucksensoren 2 parallel oder seriell angeordnet bzw. angeschlossen sein können.

Figur 3c stellt ein Modul 12 dar, in welchem insgesamt fünf Drucksensoren 2a,b angeordnet sind. Die insgesamt fünf Drucksensoren 2a,b sind über insgesamt vier Kontakte 8,8' an Steuergerät 4 angebunden. Hierbei sind die Drucksensoren 2a, unter Verwendung des Busses 10a mit Kontakten 8 verbunden und über diese an Steuergerät 4 angeschlossen. Die weiteren, in Figur 3c exemplarisch zwei, Drucksensoren 2b wiederum sind unter Verwendung von Bus 10b an Kontakte 8' angeschlossen. Beide Kontaktpaare 8,8' können an standardisierter Stelle des Moduls 12 angeordnet sein, wodurch das gesamte Modul 12 einfach und schnell auf ein Steuergerät 4 aufgesteckt bzw. an diesem angeschlossen werden kann.

Anstatt somit jeden Drucksensoren mit je vier Kontakten zu verbauen bzw. zu konnektieren, wird in Figur 3a ein Drucksensor, in Figur 3b ein Modul mit drei Drucksensoren bzw. in Figur 3c ein Modul mit fünf Drucksensoren mit dem Steuergerät verbunden. Hierbei besitzt das Ein-Drucksensormodul 12 zwei Pins 8, welche eine schnelle, digitale Stromschnittstelle, zum Beispiel PSI5 oder DSI realisieren.

Das Drei-Drucksensormodul 12 der Figur 3b besitzt ebenfalls zwei Pins 8, welches die drei Drucksensorsignale gleichfalls auf einer digitalen, synchronen oder asynchronen Stromschnittstelle gemäß PSI5 oder DSI überträgt. Das Modul 12 der Figur 3b weist dabei eine innere Zusammenschaltung der Sensoren innerhalb des Moduls über einen Seriell- oder Parallel-Bus auf.

Das Fünfdrucksensormodul 12 der Figur 3b wiederum besitzt vier Pins oder Kontakte 8,8'. Die ersten beiden Pins 8 stellen dabei die Schnittstelle für die ersten drei Drucksensoren, vergleichbar dem Modul der Figur 3b bereit, während zwei weitere Pins oder Kontakte 8' die Busverbindung zum vierten und fünften Drucksensor 2 ausbilden. Diese sind ihrerseits wiederum intern als Parallelbus oder Seriellbus verbunden und über die beiden Kontakte 8' kommunikativ nach außen bzw. zum Steuergerät 4 verbunden.

Die Drucksensoren 2 können entweder zu einem gemeinsamen Modul 12 als Baugruppe zusammengefasst sein oder aber die Busverdrahtung kann direkt zwischen den Drucksensoren erfolgen, beispielsweise als einfacher Leiter ausgebildet sein. Eine Kontaktierung auf einer Leiterplatte in einem Steuergerät 4 bleibt hiervon jedoch unberührt und weiterhin auf zwei (bzw. vier im Falle der Ausgestaltung gemäß Figur 3c) reduziert.

Als weitere Ausführungsform ist denkbar, dass alle Drucksensoren jeweils direkt mit zwei Kontakten 8 anstatt wie bisher vier Kontakten mit der Leiterplatte eines Steuergerätes kontaktiert sind. In diesem Fall wird kein Bus zwischen einzelnen Sensoren 2 verwendet, sondern jeder Sensor 2 ist direkt im bzw. mit dem Steuergerät 4 kontaktiert.

Im Falle, dass Drucksensoren 2 einzeln und direkt mit jeweils zwei Kontakten 8 mit dem Steuergerät 4 verbunden sind, lässt sich der erfindungsgemäße Bus auch auf der Leiterplatte des bzw. im ESP-Steuergerät 4 realisieren, mehrere Drucksensoren 2 somit mit einem Parallelbus oder Seriellbus miteinander verschalten. Somit lassen sich hierdurch Leiterplattenfläche sowie Leiterbahnen auf einer Leiterplatte bzw. in einem Steuergerät 4 reduzieren.

Durch eine solche nachträgliche Verschaltung ist auch eine direkte Verbindung von Drucksensoren 2 über zwei Einzelleitungen zu einem Interfacebaustein realisierbar. In anderen Worten bedeutet das, dass die Kontaktierung jedes Drucksensors selbst mit 2 Kontakten an das Steuergerät erfolgen kann und auf der Leiterplatte eines ESP-Steuergerätes die eigentliche Busleitung liegt, so dass der Interfacebaustein, der die Versorgung und das Protokoll für die Kommunikation aufbaut, nur im ESP Steuergerät direkt auf der Leiterplatte verbaut ist und kein weiterer Receiver im Drucksensormodul sitzt. Hierfür kann die Anzahl der Kontakte nicht ganz so stark reduziert werden, d.h. bei 5 Drucksensoren ergeben sich zumindest 10 Kontakte statt vorher 20.

## Patentansprüche

1. Sensormodul (12) für ein ESP-Regelsystem in einem Fahrzeug, **gekennzeichnet durch**
eine erste Mehrzahl, insbesondere zwei oder drei, Sensor-Elemente (2),
eine zweite Mehrzahl, insbesondere zwei oder drei, Sensor-Elemente (2),
ein Schnittstellenelement (8, 8') je Mehrzahl Sensor-Elemente (2), eingerichtet zur kommunikativen Anbindung der Sensor-Elemente (2) an ein Steuergerät (4) in einem Fahrzeug;
wobei die erste Mehrzahl der Sensor-Elemente (2) innerhalb des Sensormoduls (12) über einen ersten Bus (10a) gemeinsam an einem ersten Schnittstellenelement (8) angeschlossen und mit dem Steuergerät (4) kommunikativ gekoppelt ist;
wobei die zweite Mehrzahl der Sensor-Elemente (2) innerhalb des Sensormoduls (12) über einen zweiten Bus (10b) gemeinsam an einem zweiten Schnittstellenelement (8') angeschlossen und mit dem Steuergerät (4) kommunikativ gekoppelt ist;
wobei das Schnittstellenelement (8, 8') als ein Zwei-Kontakt-Schnittstellenelement ausgebildet ist, und
wobei die erste Mehrzahl der Sensor-Elemente (2) und die zweite Mehrzahl der Sensor-Elemente (2) über eine zentrale Schnittstelle mit dem Steuergerät (4) verbunden sind.

2. Modul gemäß Anspruch 1,
wobei das Schnittstellenelement (8,8') ein Schnittstellenelement ist aus der Gruppe bestehend aus digitalem Schnittstellenelement, busfähigem Schnittstellenelement, Peripheral Sensor Interface - Schnittstellenelement; Distributed System Interface - Schnittstellenelement, Strom-Schnittstellenelement und Strom-Modulations-Schnittstellenelement.

3. Modul gemäß Anspruch 1 oder 2,
wobei das Sensor-Element (2) als ein Drucksensor-Element ausgebildet und eingerichtet ist zur Bestimmung eines Druckes in einer Hydraulik-Leitung (6).

4. Modul gemäß einem der Ansprüche 1 bis 3,
wobei die erste Mehrzahl genau drei Sensor-Elemente (2) und die zweite Mehrzahl genau zwei Sensor-Elemente (2) aufweist, oder
wobei die erste Mehrzahl genau zwei Sensor-Elemente (2) und die zweite Mehrzahl genau drei Sensor-Elemente (2) aufweist.

5. Steuergerät (4), aufweisend
zumindest ein Sensor-Modul (12) gemäß einem der Ansprüche 1 bis 3.

6. Steuergerät gemäß Anspruch 5,
wobei das Steuergerät als ein Bremsregelsystem-Steuergerät, insbesondere als ein ESP-Regelsystem-Steuergerät ausgebildet ist.

7. Fahrzeug, insbesondere Elektro- und/oder Hybridfahrzeug, aufweisend ein Sensor-Modul (12) gemäß einem der Ansprüche 1 bis 4 und/oder ein Steuergerät (4) gemäß einem der Ansprüche 5 oder 6.

## Claims

1. Sensor module (12) for an ESP control system in a vehicle, **characterized by**
a first plurality, in particular two or three, of sensor elements (2),
a second plurality, in particular two or three, of sensor elements (2),
one interface element (8, 8') per plurality of sensor elements (2), configured for communicative connection of the sensor elements (2) to a controller (4) in a vehicle; wherein the first plurality of sensor elements (2) is jointly connected to a first interface element (8) and communicatively coupled to the controller (4) via a first bus (10a) inside the sensor module (12);
wherein the second plurality of sensor elements (2) is jointly connected to a second interface element (8') and communicatively coupled to the controller (4) via a second bus (10b) inside the sensor module (12);
wherein the interface element (8, 8') is in the form of a two-contact interface element, and
wherein the first plurality of sensor elements (2) and the second plurality of sensor elements (2) are connected to the controller (4) via a central interface.

2. Module according to Claim 1,
wherein the interface element (8, 8') is an interface element from the group consisting of a digital interface element, an interface element with bus capability, a Peripheral Sensor Interface interface element; a Distributed System Interface interface element, a power interface element and a power modulation interface element.

3. Module according to Claim 1 or 2,
wherein the sensor element (2) is in the form of a pressure sensor element and is configured to determine a pressure in a hydraulic line (6).

4. Module according to one of Claims 1 to 3,
wherein the first plurality has precisely three sensor elements (2) and the second plurality has precisely two sensor elements (2), or wherein the first plurality has precisely two sensor elements (2) and the second plurality has precisely three sensor elements (2).

5. Controller (4), having
at least one sensor module (12) according to one of Claims 1 to 3.

6. Controller according to Claim 5,
wherein the controller is in the form of a braking control system controller, in particular, in the form of an ESP control system controller.

7. Vehicle, in particular electrical and/or hybrid vehicle, having a sensor module (12) according to one of Claims 1 to 4 and/or a controller (4) according to either of Claims 5 and 6.

## Revendications

1. Module capteur (12) destiné à un système de régulation ESP dans un véhicule, **caractérisé par** une première pluralité, en particulier deux ou trois, d'éléments de détection (2),
une deuxième pluralité, en particulier deux ou trois, d'éléments de détection (2),
un élément d'interface (8, 8') pour chaque pluralité d'éléments de détection (2), conçu pour le raccordement par voie de communication des éléments de détection (2) à un appareil de commande (4) dans un véhicule ;
dans lequel la première pluralité d'éléments de détection (2) dans le module de détection (12) est raccordée en commun par l'intermédiaire d'un premier bus (10a) à un premier élément d'interface (8) et est couplée par voie de communication à un appareil de commande (4) ;
dans lequel la deuxième pluralité d'éléments de détection (2) à dans le module de détection (12) est raccordée en commun par l'intermédiaire d'un deuxième bus (10b) à un deuxième élément d'interface (8') et est couplée par voie de communication à l'appareil de commande (4) ;
dans lequel l'élément d'interface (8, 8') est réalisé sous la forme d'un élément d'interface à deux contacts, et
dans lequel la première pluralité des éléments de détection (2) et la deuxième pluralité des éléments de détection (2) sont reliées à l'appareil de commande (4) par l'intermédiaire d'une interface centrale.

2. Module selon la revendication 1,
dans lequel l'élément d'interface (8, 8') est un élément d'interface du groupe constitué d'un élément d'interface numérique, d'un élément d'interface à bus, d'un élément d'interface du type Peripheral Sensor Interface ; d'un élément d'interface du type Distributed Interface System, d'un élément d'interface de courant et d'un élément d'interface à modulation de courant.

3. Module selon la revendication 1 ou 2,
dans lequel l'élément de détection (2) est réalisé sous la forme d'un élément de détection de pression et est conçu pour déterminer une pression dans une conduite hydraulique (6).

4. Module selon l'une des revendications 1 à 3,
dans lequel la première pluralité comprend exactement trois éléments de détection (2) et la deuxième pluralité comporte exactement deux éléments de détection (2), ou dans lequel la première pluralité comporte exactement deux éléments de détection (2), et la deuxième pluralité comporte exactement trois éléments de détection (2).

5. Appareil de commande (4) comportant au moins un module de détection (12) selon l'une des revendications 1 à 3.

6. Appareil de commande selon la revendication 5, dans lequel l'appareil de commande est réalisé sous la forme d'un appareil de commande de système de freinage, en particulier d'un appareil de commande de système de régulation ESP.

7. Véhicule, en particulier véhicule électrique et/ou hybride, comportant un module de détection (12) selon l'une des revendications 1 à 4 et/ou un appareil de commande (4) selon l'une des revendications 5 ou 6.
